# EUROPÄISCHE PATENTSCHRIFT

(11) **EP 0 731 014 B1**
(45) Veröffentlichungstag und Bekanntmachung des Hinweises auf die Patenterteilung: **15.09.1999**
(21) Anmeldenummer: 95103460.2
(22) Anmeldetag: 10.03.1995
(51) Int. Cl.: B62D 5/083

(54) **Lenkventil mit Aktivierungsschwelle**
Steering valve with activation threshold
Valve de direction avec seuil d'activation

(43) Veröffentlichungstag der Anmeldung: 11.09.1996
(73) Patentinhaber: TRW Fahrwerksysteme GmbH & Co. KG, 40547 Düsseldorf (DE)
(72) Erfinder: Eberhart, Eugen, Dipl.-Ing., D-40223 Düsseldorf (DE)
(74) Vertreter: Stenger, Watzke & Ring Patentanwälte

(56) Entgegenhaltungen:
- WO-A-87/02318
- DE-A- 3 634 215
- DE-A- 3 934 468

## Beschreibung

Die Erfindung betrifft ein Lenkventil zur Versorgung eines Stellgliedes mit Hydraulikdruck, bestehend aus einer Eingangswelle, einer Ausgangswelle, einem Torsionsstab, der mit einem Ende mit der Eingangswelle verbunden ist, und einer die Eingangswelle umgebenden Ventilhülse, wobei in dem Lenkventil ein torsionssteifes, in Axialrichtung elastisches Element angeordnet ist, welches mit einem Ende an der Eingangswelle befestigt ist und mit seinem anderen Ende mit einer bis zu einem vorgegebenen Drehmoment gegen eine radiale Verschiebung gegen die Ventilhülse sichernden Rasteinrichtung verbunden ist, welche auf die Eingangswelle wirkende Drehmomente in auf das elastische Element wirkende Axialkräfte bis zu einer Freigabeposition überträgt.

Lenkventile der gattungsgemäßen Art werden insbesondere in Servolenk-Systemen eingesetzt. Der Aufbau derartiger Servolenk-Systeme ist an sich bekannt. Eine mit einer Lenkstange verbundene Eingangswelle ist über einen Torsionsstab mit einer mit einem Ritzel versehenen Ausgangswelle verbunden. Das Ritzel wirkt auf die Zahnstange einer Lenkung. Für derartige Lenksysteme ist die Verwendung von Lenkventilen bekannt. Dazu ist in bekannter Weise eine Ventilhülse vorgesehen, welche mit der Ausgangswelle in Eingriff steht und die Eingangswelle umgibt. Von einer Pumpe wird Hydraulikflüssigkeit unter Druck durch das System gepumpt. Bei einer relativen Verdrehung der Eingangswelle zur Ventilhülse wird Hydraulikdruck einem Hydraulikmotor zugeführt, welcher die Zahnstangenbewegung in eine der beiden möglichen Richtungen unterstützt.

Die Aktivierung derartiger Lenkventile erfolgt durch das Verdrehen der Eingangswelle gegenüber der Ausgangswelle, wobei durch den dazwischen angeordneten Torsionsstab ein Torsionsmoment überwunden werden muß. Der Nachteil bei solchen Lenkventilen ist, daß systembedingt immer zuerst über den Verdrehwinkel des Torsionsstabes gesteuert werden muß, um eine Lenkbetätigung zu erzielen. Dies ist besonders dann nachteilig, wenn aufgrund geringer Kraftbedingungen im Grunde keine Hydraulikunterstützung erforderlich wäre, sondern eine manuelle Lenkbetätigung ausreichen würde. Dies ist beispielsweise bei hohen Geschwindigkeiten, zum Beispiel bei Autobahnfahrten, der Fall. Der Fahrer muß im ungünstigsten Fall das Lenkrad mehrere fingerbreit verdrehen, ohne eine Lenkbewegung zu erzielen. Dies wird im allgemeinen von der Bedienperson als unangenehm empfunden, da sich durch dieses scheinbare Spiel um die Mittenlage kein direktes und präzises Lenkverhalten erzielen läßt, wie dies beispielsweise eine mechanische Lenkung bietet. Es besteht somit Bedarf an einem Lenkventil, welches eine Aktivierungsschwelle aufweist, so daß sich das Lenkgetriebe unterhalb eines festgelegten Drehmomentes in der Art eines manuellen Lenkgetriebes verhält, so daß praktisch schon geringen Lenkradbewegungen unmittelbar und direkt eine Lenkwirkung folgt.

Es sind zwar sogenannte Zentriereinrichtungen bekannt, mit welchen ein erhöhtes Rückstellmoment in der Zentrierposition eines Lenkventils erzeugt werden kann, jedoch weisen derartige Zentriereinrichtungen, wie sie beispielsweise aus der EP-PS 02 44 449 bekannt sind, eine Reihe von Nachteilen auf. Wegen der Vielzahl der zusätzlich verwendeten Bauteile, insbesondere der Verbindungsteile, sind Zentriereinrichtungen hinsichtlich der Herstellung unwirtschaftlich. Darüber hinaus vergrößern sie den Volumenbedarf, das heißt das Lenkventil wird dicker, da zwischen Torsionsstab und Eingangswelle bzw. Ventilhülse noch Verbindungshülsen angeordnet werden müssen. Weiterhin sind derartige Zentriereinrichtungen hinsichtlich der Montage sehr aufwendig, da gegenüber herkömmlichen Lenkventilen eine größere Anzahl von Teilen relativ zueinander zentriert werden müssen. So müssen die Verbindungsteile relativ zum Torsionsstab und relativ zueinander ausgerichtet werden, dann müssen die Eingangs- und Ausgangswellen relativ zueinander und relativ zur Zentriereinrichtung und schließlich die Ventilhülse relativ zur Eingangswelle zentriert werden. Darüber hinaus sind die Zentriermomente bei bekannten Zentriereinrichtungen nicht einstellbar, da sie zwischen die Stirnflächen von Hülsen gesetzt sind und die Länge des eine Kraft ausübenden Elementes vorgegeben ist. Man ist also darauf angewiesen, das Federelement zu variieren, wenn man das Drehmoment verändern möchte. Derartige vorbekannte Zentriereinrichtungen sind somit nicht wirtschaftlich und technisch sinnvoll einsetzbar, um eine Aktivierungsschwelle für ein gattungsgemäßes Lenkventil zu erzeugen.

Aus der DE-OS 36 34 215 ist ein Lenkventil der gattungsgemäßen Art bekannt, wobei parallel zum Torsionsstab eine blattfederartig ausgebildete Zentrierfeder an einem zylindrischen Fortsatz des Drehschiebers befestigt ist, welche eine Vertiefung an dem blattfederartigen Teil aufweist. Die Ventilhülse weist an ihrer einen Stirnfläche eine kegelartige Vertiefung auf. Zwischen den beiden Vertiefungen ist eine Kugel gehalten. Die Aktivierungsschwelle ist abhängig von der Federkraft der blattfederartigen Zentrierfeder, die nicht einstellbar ist.

Derartige gattungsgemäße Lenkventile stellen durch das elastische Element eine Aktivierungsschwelle in Form einer mit dem Eingangsdrehmoment zu überwindenden Federkraft bereit, wobei jedoch keine Möglichkeit besteht, die das zur Aktivierung erforderliche Drehmoment bestimmende Federkraft des elastischen Elementes einstellen zu können.

Davon ausgehend liegt der vorliegenden Erfindung die **Aufgabe** zugrunde, ein Lenkventil der gattungsgemäßen Art dahingehend weiterzubilden, daß es einfach und wirtschaftlich herstellbar und montierbar, insbesondere zentrierbar ist, gegenüber gattungsgemäßen Lenkventilen keinen erhöhten Raumbedarf aufweist und bei sicherer Funktion eine Aktivierungsschwelle aufweist.

Zur technischen **Lösung** dieser Aufgabe wird das gattungsgemäße Lenkventil dadurch weitergebildet, daß das elastische Element an dem an der Eingangswelle zu befestigenden Ende mit einer Lagerhülse verbunden ist, die bei der Montage zur Einstellung der Federkraft in einer axialen Position an der Eingangswelle angeschweißt ist und das elastische Element ein Metallfaltenbalg ist.

Bei dem erfindungsgemäßen Lenkventil wird durch das elastische Element eine Aktivierungsschwelle in Form einer mit dem Eingangsdrehmoment zu überwindenden Federkraft bereitgestellt, wobei das elastische Element an der Außenfläche der Eingangswelle in vorteilhafter Weise angeschweißt werden kann. Wegen der einfachen, einem herkömmlichen Lenkventil hinzuzufügenden Bauteile wird der wirtschaftliche Aufwand sehr gering. Auch ist die Zentrierung sehr einfach, da die Eingangswelle, die Ventilhülse und die Ausgangswelle in herkömmlicher Weise zueinander ausrichtbar sind, während das elastische Element im nachhinein an Ort und Stelle fixiert werden kann. Dadurch ergibt sich zwangsläufig auch der Vorteil der einfachen Einstellung des Aktivierungsschwellmomentes, da die axiale Vorspannung des elastischen Elementes in Abhängigkeit von dem Ort der Befestigung an der Eingangswelle zum Zeitpunkt der Montage variiert werden kann.

Es kommt darauf an, daß durch das elastische Element die Kriterien der Torsionssteifheit und der Axialelastizität erfüllt werden. Die Torsionssteifheit bewirkt, daß bei geringen Eingangsdrehmomenten über die Eingangswelle keine Verdrehung zwischen Eingangs- und Ausgangswelle bzw. zwischen Eingangswelle und Ventilhülse bewirkt wird. Das torsionssteife, axialelastische Element überträgt dieses Drehmoment über die Rastvorrichtung auf die Ventilhülse. Mit steigendem Drehmoment wird die von der Rasteinrichtung auf das elastische Element übertragene axiale Kraft größer, bis das axialelastische Element aus der Rastvorrichtung axial herausgedrückt wird, so daß eine Relativ-Verdrehung zwischen Eingangswelle und Ventilhülse stattfindet und das Lenkventil aktiviert wird. Gemäß der Erfindung ist das elastische Element ein Metallfaltenbalg. Dieser vereinigt mit den Vorteilen der Torsionssteifigkeit und der axialen Elastizität noch den Vorteil einer linearen Federsteifigkeit.

Das elastische Element ist an einem an der Eingangswelle ausgebildeten oder angeordneten Lagerring befestigt. Die Rasteinrichtung besteht gemäß einem einfachen Vorschlag der Erfindung in einer im wesentlichen V-förmigen Kerbe an der Stirnfläche der Ventilhülse. Die Rasteinrichtung kann alternativ als geneigte Nockenbahn am äußeren Umfang der Ventilhülse ausgebildet sein. In besonders vorteilhafter Weise ist die Rasteinrichtung eine Kugelkupplung, bei welcher Kugeln zwischen Kupplungsringen angeordnet sind, in welchen miteinander zusammenwirkende Vertiefungen ausgebildet sind. Die Vertiefungen haben einen kurvenförmigen oder im wesentlichen V-förmigen Verlauf, so daß durch die in den Vertiefungen angeordneten Kugeln die beiden Kupplungsringe bei relativer Verdrehung zueinander axial voneinander wegbewegt werden. Gemäß einem Vorschlag der Erfindung sind die Kupplungsringe gesinterte Bauteile. Neben den gewünschten Materialeigenschaften können durch den Sinterprozeß auf einfachste Weise beliebige Lagerkonturen gebildet werden. In vorteilhafter Weise sind in den Stirnflächen der Sinterringe jeweils drei Vertiefungen mit gleichem Winkelabstand zueinander zur Aufnahme der Kugeln angeordnet.

Weitere Vorteile und Merkmale der Erfindung ergeben sich aus der folgenden Beschreibung anhand der Figuren. Dabei zeigen:
- Figur 1: eine Schnittdarstellung durch ein Ausführungsbeispiel eines erfindungsgemäßen Lenkventils und
- Figur 2: eine vergrößerte Schnittdarstellung des Eingangswellenbereichs des Lenkventils gemäß Figur 1.

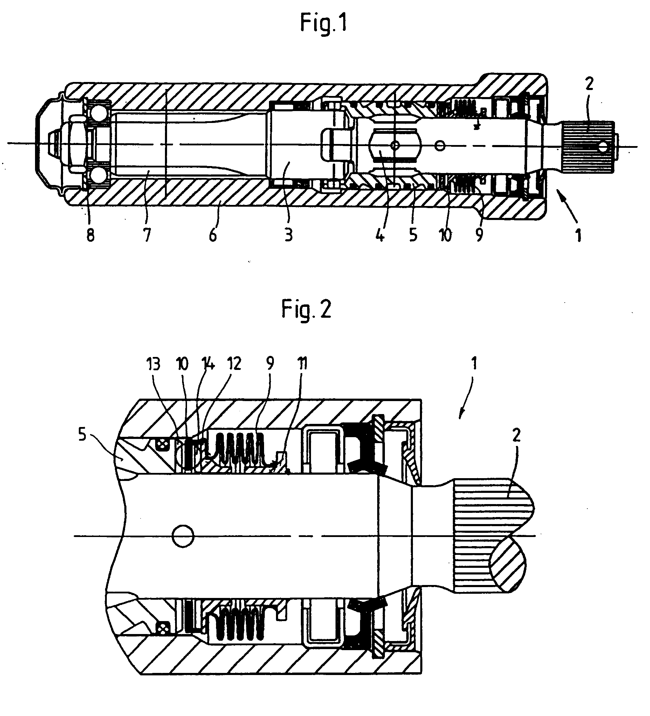

Das in den Figuren gezeigte Lenkventil 1 umfaßt eine Eingangswelle 2 und eine Ausgangswelle 3, welche mittels eines Torsionsstabes 4 miteinander verbunden sind. Die Eingangswelle 2 ist von einer Ventilhülse 5 umgeben, welche mit der Ausgangswelle 3 verbunden ist. Diese Bauteile sind in einem Gehäuse 6 angeordnet. Die Ausgangswelle 3 weist ein Ritzel 7 auf, mit welchem die nicht gezeigte Zahnstange einer Lenkung bewegbar ist. Die Wellen sind in dem Gehäuse mittels Lagern 8 verdrehbar gelagert. An der Eingangswelle ist ein torsionssteifes, in axialrichtung elastisches Element in Form eines Metallfaltenbalges 9 befestigt. Wie in Fig. 2 zu sehen wird dazu eine Ringhülse 11 verwendet, welche an der geeigneten Position an der Eingangswelle angeschweißt ist. Am anderen Ende ist das elastische Element 9 an dem Kupplungsring 12 einer eine Rasteinrichtung 10 bildenden Kugelkupplung befestigt. Die Ventilhülse 5 weist an ihrer dem elastischen Element zugewandten Stirnfläche ebenfalls einen Kupplungsring 13 auf, welcher als Zusatzbauteil an der Ventilhülse angeordnet oder an der Ventilhülse direkt ausgebildet sein kann. Die Kupplungsringe (12 und 13) weisen an ihren gegenüberliegenden Stirnflächen im wesentlichen V-förmige Einkerbungen auf, in welche Kugeln 14 eingesetzt sind. Bei einer radialen Verdrehung der beiden Kupplungsringe (12 und 13) gegeneinander wird somit durch die Kugeln eine auf den Kupplungsring 12 wirkende axiale Kraft ausgeübt, welche gegen die Federkraft des elastischen Elements 9 anarbeitet. Sobald diese drehmomentabhängige Kraft die Federkraft des elastischen Elementes 9 übersteigt, kann die Eingangswelle 2 relativ zur Ventilhülse 5 verdreht und das Lenkventil aktiviert werden.

Es ist offensichtlich, daß durch diese Anordnung das erfindungsgemäße Lenkventil eine Aktivierungsschwelle aufweist. Das zur Aktivierung erforderliche Drehmoment ist abhängig von der Federkraft des elastischen Elements 9, so daß es bei der Montage einstellbar ist. Das elastische Element 9 wird vorgespannt und die Ringhülse 11 an der Eingangswelle befestigt, wodurch das zur Verdrehung erforderliche Drehmoment eingestellt ist. An der Zentrierung des Lenkventils ändert sich gegenüber herkömmlichen Bauarten nichts. Auch ist der Raumbedarf gegenüber einem herkömmlichen Lenkventil kaum vergrößert. Die verwendeten Bauteile sind einfach und wirtschaftlich herstellbar und praktisch wartungsfrei. Die Erfindung ist mit unterschiedlichen Arten elastischer Elemente und Rasteinrichtungen realisierbar.

### Bezugszeichenliste:

- 1: Lenkventil
- 2: Eingangswelle
- 3: Ausgangswelle
- 4: Torsionsstab
- 5: Ventilhülse
- 6: Gehäuse
- 7: Ritzel
- 8: Lager
- 9: elastisches Element
- 10: Rasteinrichtung
- 11: Ringhülse
- 12: Kupplungsring
- 13: Kupplungsring
- 14: Kugel

## Patentansprüche

1. Lenkventil zur Versorgung eines Stellgliedes mit Hydraulikdruck, bestehend aus einer Eingangswelle, einer Ausgangswelle, einem Torsionsstab, der mit einem Ende mit der Eingangswelle und dem anderen Ende mit der Ausgangswelle verbunden ist, und einer die Eingangswelle umgebenden Ventilhülse, wobei in dem Lenkventil (1) ein torsionssteifes, in Axialrichtung elastisches Element (9) angeordnet ist, welches mit einem Ende an der Eingangswelle (2) befestigt und mit seinem anderen Ende mit einer bis zu einem vorgegebenen Drehmoment gegen eine radiale Verschiebung gegen die Ventilhülse (5) sichernden Rasteinrichtung (10) verbunden ist, welche auf die Eingangswelle (2) wirkende Drehmomente in auf das elastische Element (9) wirkende Axialkräfte bis zu einer Freigabeposition überträgt, dadurch gekennzeichnet, daß das elastische Element (9) an dem an der Eingangswelle (2) zu befestigenden Ende mit einer Lagerhülse (11) verbunden ist, die bei der Montage zur Einstellung der Federkraft in einer axialen Position an der Eingangswelle (2) fixiert ist, wobei die Lagerhülse (11) an der Eingangswelle (2) angeschweißt ist und das elastische Element ein Metallfaltenbalg ist.

2. Lenkventil nach Anspruch 1, dadurch gekennzeichnet, daß die Rasteinrichtung eine Kugelkupplung ist.

3. Lenkventil nach Anspruch 2, dadurch gekennzeichnet, daß die Kugelkupplung gesinterte Kupplungsringe (12, 13) umfaßt.

4. Lenkventil nach Anspruch 3, dadurch gekennzeichnet, daß die Kupplungsringe (12, 13) drei Kugelaufnahmevertiefungen aufweisen, die in gleichen Winkelabständen zueinander auf der Kupplungsringstirnfläche angeordnet sind.

## Claims

1. Steering valve for supplying an actuator with hydraulic pressure, comprising an input shaft, an output shaft, a torsion bar connected by one end to the input shaft and by the other end to the output shaft, and a valve sleeve surrounding the input shaft, wherein there is disposed in the steering valve (1) a torsionally rigid, axially resilient element (9), which at one end is fastened to the input shaft (2) and at the other end is connected to a detent device (10), which up to a predetermined torque prevents a radial displacement relative to the valve sleeve (5) and which up to a release position converts torques acting upon the input shaft (2) into axial forces acting upon the resilient element (9), characterized in that the resilient element (9) at the end to be fastened to the input shaft (2) is connected to a bearing bush (11) which, during assembly, for adjustment of the spring action is fixed in an axial position on the input shaft (2), wherein the bearing bush (11) is welded to the input shaft (2) and the resilient element is a metal bellows.

2. Steering valve according to claim 1, characterized in that the detent device is a ball coupling.

3. Steering valve according to claim 2, characterized in that the ball coupling comprises sintered coupling rings (12, 13).

4. Steering valve according to claim 3, characterized in that the coupling rings (12, 13) have three ball location recesses, which are disposed at identical angular distances from one another on the coupling ring end face.

## Revendications

1. Distributeur de direction pour l'alimentation d'un organe de réglage en pression hydraulique, se composant d'un arbre d'entrée, d'un arbre de sortie, d'une barre de torsion dont une extrémité est reliée à l'arbre d'entrée et l'autre extrémité, à l'arbre de sortie, ainsi que d'un manchon de distributeur entourant l'arbre d'entrée, un élément (9) rigide en torsion, élastique en direction axiale, qui est disposé dans le distributeur de direction (1), étant fixé à une extrémité à l'arbre d'entrée (2) et étant relié à son autre extrémité à un dispositif d'enclenchement (10) qui bloque un déplacement radial par rapport au manchon de distributeur (5) jusqu'à un couple prescrit de rotation et qui transmet les couples de rotation agissant sur l'arbre d'entrée (2) sous la forme de forces axiales agissant sur l'élément élastique (9) jusqu'à une position de libération, caractérisé en ce que l'élément élastique (9) est relié, à l'extrémité devant être fixée à l'arbre d'entrée (2), à une douille de support (11) qui est fixée lors du montage à l'arbre d'entrée (2) à une position axiale pour le réglage de la force d'élasticité, la douille de support (11) étant rapportée par soudage sur l'arbre d'entrée (2) et l'élément élastique étant un soufflet métallique.

2. Distributeur de direction selon la revendication 1, caractérisé en ce que le dispositif d'enclenchement est un dispositif d'accouplement à billes.

3. Distributeur de direction selon la revendication 2, caractérisé en ce que le dispositif d'accouplement à billes comprend des anneaux frittés d'accouplement (12, 13).

4. Distributeur de direction selon la revendication 3, caractérisé en ce que les anneaux d'accouplement (12, 13) comportent trois empreintes de logement de billes qui sont disposées à des mêmes distances angulaires les unes des autres sur la surface frontale des anneaux du dispositif d'accouplement.
